Europäisches Patentamt

European Patent Office

Office européen des brevets

(19)

(11) Publication number: **0 018 514**
**B1**

(12) **EUROPEAN PATENT SPECIFICATION**

(45) Date of publication of patent specification: **01.06.83**

(51) Int. Cl.³: **G 01 K 13/12, G 01 N 1/12**

(21) Application number: **80101889.6**

(22) Date of filing: **09.04.80**

(54) Molten metal sampler with heat sensors.

(30) Priority: **26.04.79 US 33637**
**17.12.79 US 104213**

(43) Date of publication of application:
**12.11.80 Bulletin 80/23**

(45) Publication of the grant of the patent:
**01.06.83 Bulletin 83/22**

(84) Designated Contracting States:
**AT BE DE FR GB IT SE**

(56) References cited:
**DE - A - 2 110 922**
**FR - A - 2 335 837**
**US - A - 3 756 082**
**US - A - 3 915 002**
**US - A - 3 922 916**

(73) Proprietor: **Falk, Richard Arden**
**519 Westminster Drive**
**Waukesha Wisconsin (US)**

(72) Inventor: **Falk, Richard Arden**
**519 Westminster Drive**
**Waukesha Wisconsin (US)**

(74) Representative: **Fisher, Bernard et al,**
**Raworth, Moss & Cook 36 Sydenham Road**
**Croydon Surrey CR0 2EF (GB)**

Courier Press, Leamington Spa, England.

## Molten metal sampler with heat sensors

### Background of the invention

The invention relates to a molten metal sampling device which employs two thermocouples, one for sensing bath temperature and the other for determining the liquidus arrest temperature of the sample in the mold cavity. My U.S. patent 3,481,201 shows the use of thermocouples for taking both bath temperatures and the liquidus arrest temperature of the sample within the sample cavity. Various patents show the use of two thermocouples for simultaneously recording these temperatures. The Boyle U.S. patent 3,455,164; Hance U.S. patent 3,463,005; Born U.S. patent 3,685,359; and Takamura, et al., U.S. patent 4,002,069 are illustrative of patents having two thermocouples for dual temperature measurements. These prior art patents require numerous separate parts and time consuming assembly techniques.

Such a two thermocouple device is also disclosed in U.S. Patent Specification No. 3,922,916. In this case, both thermocouples are disposed in protective U-shaped tubes and are electrically connected to relatively heavy contact elements disposed in a body structure element which supports one of the protective tubes. This one protective tube extends into a sample cavity within the sampling device to measure the liquidus arrest temperature. The other protective tube is supported at the lower or leading end of the sampling device for insertion into the molten metal and the thermocouple protected by this other protective tube is electrically connected to the relatively remote contact elements by conductors in grooves in the body structure of the sampling device.

The present invention provides a relatively simple unitary assembly of two thermocouples which is easily positioned in the sampler.

According to the present invention there is provided a molten metal sampler comprising wall means defining a sample forming cavity, a thermocouple connector head, first heat sensing means for measuring the molten bath temperature and including a bath temperature thermocouple element protected by a first U-shaped protective tube mounted on the sampler and extending externally thereof, second heat sensing means for measuring the liquidus arrest temperature and including a liquidus arrest thermocouple element protected by a second U-shaped protective tube supported on the head and extending into the sample cavity and electrical connecting means for the thermocouple elements which electrical connecting means is disposed in the connector head characterised in that the first U-shaped protective tube is supported on the connector head and extends through the sample cavity and through a slot or aperture in said wall means to the exterior of the sample cavity.

As will be appreciated, both thermocouples are mounted in a single connector head which includes a jack for receiving an electrical plug. The thermocouple assembly requires a minimum of parts, thus reducing assembly time and overall cost.

More specifically, the thermocouple connector head supports and provides connecting terminals for two fused quartz U-shaped thermocouple tubes which are mounted so that they are nested together. That is, planes through the U-tube legs of each thermocouple are generally at right angles and the sample cooling curve temperature tube, which is shorter, is located within and spaced from the tip of the bath temperature tube. This provides a compact arrangement. To eliminate any cooling effect that the fused quartz legs of the bath temperature thermocouple might have on molten metal adjacent the tip of the cooling curve thermocouple during measurement thereof, the legs of the bath temperature thermocouple are desirably bowed outwardly to space the legs from the tip and junction of the cooling curve thermocouple.

Further objects, advantages and features of the invention will become apparent from the disclosure.

### Description of the drawings

Fig. 1 is a side elevational view of a sampler in accordance with the invention.

Fig. 2 is a side elevational view of a modified embodiment of the invention.

Fig. 3 is an enlarged sectional view along line 2—2 of Fig. 1.

Fig. 4 is a fragmentary view of a modified embodiment.

### Description of the preferred embodiment

Although the disclosure hereof is detailed and exact to enable those skilled in the art to practice the invention, the physical embodiments herein disclosed merely exemplify the invention which may be embodied in other specific structure. The scope of the invention is defined in the claims appended hereto.

The sampling lance 10 includes a refractory cartridge 12 with a cylindrical wall 14 and end walls 16 and 18 which define a sample forming cavity 19. End wall 16 has a slot 17 for receiving the bath temperature thermocouple tube as hereinafter described. The cartridge can be contained in a paperboard sleeve 20 as is well known in the art. The thermocouple mounting and connector head 22 comprises several paperboard sleeves. As disclosed, there is an inner sleeve 21 which interfits in an outer paperboard sleeve 23. The outer paperboard sleeve projects through opening 25 in end wall 18 and is secured in place by refractory cement.

The thermocouple connector head 22 includes a first fused quartz tube 26 and a second tube 28. The first tube 26 is longer than the second tube and projects through the slot for exposure to the bath upon immersion of the sampler. A protective fusible cap 31 protects the tip 33. The tube 26 is fused quartz and U-shaped as is typical in the art and has its ends anchored in the head 22. The second tube 28 is also U-shaped and is shorter in length and has its tip 32 located between the opposed runs or legs 34 and 36 of the first tube 26. The tubes 26, 28 are nested together to provide a compact, easily assembled construction. Moreover, the outer tube 26 provides some protection for the inner tube 28 during and prior to assembly. The leads for the thermocouples are contained in the cardboard sleeves and exposed in the interior 37 of sleeve 21 for electrical connection with a plug 41. As disclosed, the plug has four band conductors 43 for electrical connection with the exposed thermocouple leads.

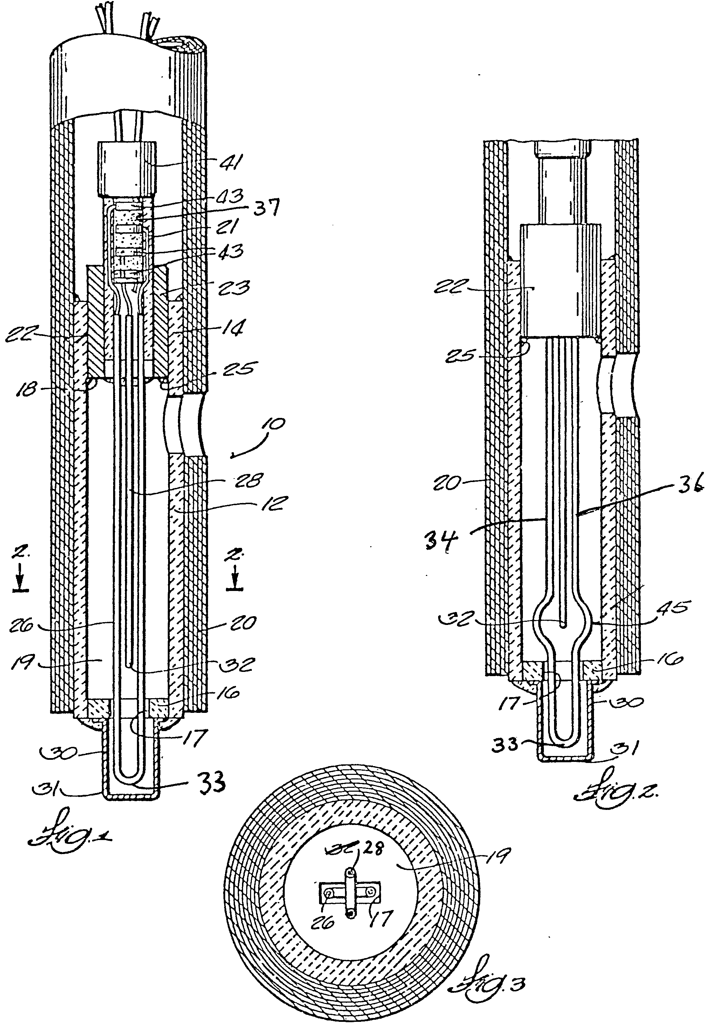

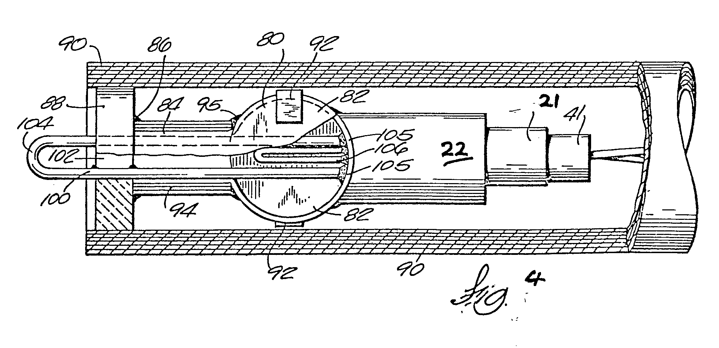

As best shown in Fig. 2, the legs of U-tube 26 are desirably bowed or spaced outwardly at 45 to minimize the cooling effect of the legs of tube 26 adjacent the tip 32.

In Fig. 4, the sample cavity 80 is defined by a pair of disc-shaped metallic mold halves 82 which have semi-cylindrical metal neck portions 84 and which are assembled to provide a fill passage and the sample cavity 80. The neck portions 84 are cemented by refractory cement 86 to a refractory disc 88 which has an aperture 102 for the fill passage. The refractory disc 88 is wedged inside a cardboard sleeve 90 which supports the components. The mold halves are held together by metal clips 92. A cardboard sleeve 94 is cemented to the parts by a refractory cement bead 86 and a bead of refractory cement 95.

In accordance with the invention, a fused quartz U-shaped thermocouple tube 100 extends through the mold cavity and the neck portions 84 and through the aperture 102 in the ceramic disc to expose the tip 104 to the bath. Notches 105 in the mold halves enable insertion of the tube 100 past the wall of the mold halves. A cooling curve thermocouple 106 extends into the mold cavity. A connecting sleeve 21 and electrical plug 41 are employed for the electrical connections.

## Claims

1. A molten metal sampler comprising wall means (14, 16, 18, Figs. 1 to 3; 82, Fig. 4) defining a sample forming cavity (19, Figs. 1 to 3; 80, Fig. 4), a thermocouple connector head (22, Figs. 1 to 4), first heat sensing means for measuring the molten bath temperature and including a bath temperature thermocouple element protected by a first U-shaped protective tube (26, Figs. 1 to 3; 100, Fig. 4) mounted on the sampler and extending externally thereof, second heat sensing means for measuring the liquidus arrest temperature and including a liquidus arrest thermocouple element protected by a second U-shaped protective tube (28, Figs. 1 to 3; 106, Fig. 4) supported on the head (22) and extending into the sample cavity (19, Figs. 1 to 3; 80, Fig. 4) and electrical connecting means (43) for the thermocouple elements which electrical connecting means (43) is disposed in the connector head (22) characterised in that the first U-shaped protective tube (26, Figs. 1 to 3; 100, Fig. 4) is supported on the connector head (22) and extends through the sample cavity (19, Figs. 1 to 3; 80, Fig. 4) and through a slot or aperture (17, Figs. 1 to 3; 102, Fig. 4) in said wall means (14, 16, 18, Figs. 1 to 3; 82, Fig. 4) to the exterior of the sample cavity (19, Figs. 1 to 3; 80, Fig. 4).

2. A sampler according to claim 1 characterised in that the first and second protective tubes (26, 28, Figs. 1 to 3; 100, 106, Fig. 4) are nested together with the tip (32, Figs. 1 to 3) of the second tube (28, Figs. 1 to 3; 106, Fig. 4) between opposed runs or legs (34, 36, Figs. 1 to 3) of the first protective tube (26, Figs. 1 to 3; 100, Fig. 4).

3. A sampler according to claim 2 characterised in that the legs of the first and second protective tubes (26, 28, Figs. 1 to 3; 100, 106, Fig. 4) are in planes which are generally at right angles to each other.

4. A sampler according to claim 2 or 3 characterised in that the legs (34, 36, Fig. 2) of the first protective tube (26, Figs. 1 to 3) have leg portions (45, Fig. 2) which are bowed outwardly adjacent the tip (32, Figs. 1 to 3) of the second protective tube (28, Figs. 1 to 3) to minimise the cooling effect of the first protective tube (26) on the tip (32) of the second protective tube (28).

5. A sampler according to any one of claims 1 to 4 characterised in that the wall means defining the sample cavity (80, Fig. 4) comprises disc-shaped metallic mold halves (82) with semi-cylindrical neck portions (84), the neck portions (84) being secured to a refractory disc (88) which has an aperture (102) for a fill passage and the first protective tube (100) extending through the sample cavity (80), neck portions (84) and aperture (102) to the exterior of the sampler.

## Patentansprüche

1. Probeentnahmevorrichtung für geschmolzene Metalle, mit Wänden (14, 16, 18, Fig. 1 bis 3, 82, Fig. 4), die einen Probeformhohlraum (19, Fig. 1 bis 3; 80, Fig. 4) definieren, mit einem Thermoelement-Anschlußkopf (22, Fig. 1 bis 4) mit einer ersten Temperaturfühleinrichtung zum Messen der Schmelzebadtemperatur, die ein Badtemperatur-Thermoelement aufweist, das durch ein erstes U-förmiges Schutzrohr (26, Fig. 1 bis 3; 100, Fig. 4) geschützt ist, welches an der Probeentnahmevorrichtung befestigt ist und sich außerhalb hievon erstreckt, mit einer zweiten Temperaturfühleinrichtung zum Messen der Erstarrungstemperatur, die ein Erstarrungstemperatur-Thermoelement aufweist, das durch ein zweites U-förmiges Schutzrohr (28, Fig. 1 bis 3 106, Fig. 4) geschützt ist, das am Kopf (22) gehalten ist und sich in den Probehohlraum (19, Fig. 1 bis 3, 80, Fig. 4) erstreckt, und mit einer elektrischen Verbindungseinrichtung (43) für die Thermoelemente, welche elktrische Verbindungseinrichtung (43) im Anschlußkopf (22) angeordnet ist, dadurch gekennzeichnet, daß das erste U-förmige Schutzrohr (26, Fig. 1 bis 3; 100, Fig. 4) am Anschlußkopf (22) gehalten ist und sich durch den Probehohlraum (19, Fig. 1 bis 3; 80, Fig. 4) sowie durch einen Schlitz oder eine Öffnung (17, Fig. 1 bis 3; 102, Fig. 4) in den Wänden (14, 16, 18, Fig. 1 bis 3; 82, Fig. 4) zur Außenseite des Probehohlraums (19, Fig. 1 bis 3; 80, Fig. 4) erstreckt.

2. Probeentnahmevorrichtung nach Anspruch 1, dadurch gekennzeichnet, daß das erste und zweite Schutzrohr (26, 28, Fig. 1 bis 3; 100, 106, Fig. 4) ineinanderliegend angeordnet sind, wobei die Spitze (32, Fig. 1 bis 3) des zweiten Rohres (28, Fig. 1 bis 3; 106, Fig. 4) zwischen gegenüberliegenden Rohrteilen oder Schenkeln (34, 36, Fig. 1 bis 3) des ersten Schutzrohres (26, Fig. 1 bis 3; 100, Fig. 4) vorgesehen ist.

3. Probeentnahmevorrichtung nach Anspruch 2, dadurch gekennzeichnet, daß die Schenkel des ersten und des zweiten Schutzrohres (26, 28, Fig. 1 bis 3; 100, 106, Fig. 4) in zueinander allgemain rechtwinkelig verlaufenden Ebenen angeordnet sind.

4. Probeentnahmevorrichtung nach Anspruch 2 oder 3, dadurch gekennzeichnet, daß die Schenkel (34, 36, Fig. 2) des ersten Schutzrohres (26, Fig. 1 bis 3) Schenkelteile (45, Fig. 2) aufweisen, die benachbart der Spitze (32, Fig. 1 bis 3) des zweiten Schutzrohres (28, Fig. 1 bis 3) nach außen gebogen sind, um die Kühlwirkung des ersten Schutzrohres (26) auf die Spitze (32) des zweiten Schutzrohres (28) möglichst gering zu halten.

5. Probeentnahmevorrichtung nach einem der Ansprüche 1 bis 4, dadurch gekennzeichnet, daß die den Probehohlraum (80, Fig. 4) definierenden Wände scheibenförmige metallische Formhälften (82) mit halbzylindrischen Halsteilen (84) aufweisen, wobei die Halsteile (84) an einer feuerfesten Scheibe (88) befestigt sind, die eine Öffnung (102) für einen Fülldurchlaß aufweist, und wobei sich das erste Schutzrohr (100) durch den Probehohlraum (80), die Halsteile (84) und die Öffnung (102) zur Außenseite der Probeentnahmevorrichtung erstreckt.

**Revendications**

1. Echantillonneur pour métaux fondus qui comprend des parois (14, 16, 18, Figures 1 à 3;

82, Figure 4) définissant une cavité de formation d'échantillon (19, Figure 1 à 3; 80, Figure 4), une tête de liaison de thermocouple (22, Figures 1 à 4), des premiers moyens de détection de chaleur, pour mesurer la température du bain fondu, qui comprennent un élément de thermocouple pour la température du bain, protégé par un premier tube protecteur en forme d'U (26, Figures 1 à 3; 100, Figure 4), monté sur l'échantillonneur et s'étendant extéreurement à celui-ci, des seconds moyens de détection de chaleur, pour mesurer la température d'arrêt du liquidus, qui comprennant un élément de thermocouple d'arrêt de liquidus, protégé par un second tube protecteur en forme d'U (28, Figures 1 à 3; 106, Figure 4), supporté par la tête (22) et s'étendant dans la cavité de l'échantillon (19, Figures 1 à 3; 80, Figure 4), et des moyens de liaison électrique (43) pour les éléments de thermocouple, ces moyens de liaison électrique (43) étant disposés dans la tête de liaison (22), cet échantillonneur étant caractérisé en ce que la premier tube protecteur en forme d'U (26, Figures 1 à 3; 100, Figure 4), est supporté par la tête de liaison (22) et il s'étend au travers de la cavité d'échantillon (19, Figures 1 à 3; 80, Figure 4) et d'une fente ou ouverture (17, Figures 1 à 3; 102, Figure 4) ménagée dans lesdites parois (14, 16, 18, Figures 1 à 3; 82, Figure 4), vers l'extérieur de la cavité d'échantillon (19, Figures 1 à 3; 80, Figure 4).

2. Echantillonneur selon la revendication 1, caractérisé en ce que les premier et second tubes protecteurs (26, 28, Figures 1 à 3; 100, 106, Figure 4) sont emboîtés l'un dans l'autre, l'extrémité (32, Figures 1 à 3) du second tube (28, Figures 1 à 3; 106, Figure 4) étant positionnée entre les branches ou les pattes opposées (34, 36, Figures 1 à 3) du premier tube protecteur (26, Figures 1 à 3; 100, Figure 4).

3. Echantillonneur selon la revendication 2, caractérisé en ce que les pattes des premier et second tubes protecteurs (26, 28, Figures 1 à 3; 100, 106, Figure 4) sont situées dans des plans qui sont généralement perpendiculaires.

4. Echantillonneur selon l'une des revendications 2 ou 3, caractérisé en ce que les pattes (34, 36, Figure 2) du premier tube protecteur (26, Figures 1 à 3) comportent des parties (45, Figure 2) qui sont recourbées vers l'extérieur, à proximité de l'extrémité (32, Figures 1 à 3) du second tube protecteur (28, Figures 1 à 3), afin de minimiser l'effet de refroidissement du premier tube protecteur (26) sur l'extrémité (32) du second tube protecteur (28).

5. Echantillonneur selon l'une quelconque des revendications 1 à 4, caractérisé en ce que les parois défissant la cavité d'échantillonnage (80, Figure 4) comprennent des moitiés de moule métallique en forme de disque (82) ayant des parties de col semi-cylindriques (84), ces parties de col (84) étant fixées sur un disque réfractaire (88) qui comporte une ouverture pour un passage de remplissage, et le premier tube protecteur (100) s'étendant au travers de la cavité d'échantillon (80), des parties de col (84) et de l'ouverture (102), vers l'extérieur de l'échantillonneur.

0018514

Fig.1

Fig.2

Fig.3

1

0018514

Fig. 4

2